# EUROPÄISCHE PATENTSCHRIFT

(11) **EP 2 541 740 B1**
(45) Veröffentlichungstag und Bekanntmachung des Hinweises auf die Patenterteilung: **22.04.2020**
(21) Anmeldenummer: 11005300.6
(22) Anmeldetag: 29.06.2011
(51) Int. Cl.: H02K 11/01, H02K 1/14, H02K 3/52

(54) **Stator**
Stator
Stator

(43) Veröffentlichungstag der Anmeldung: 02.01.2013
(73) Patentinhaber: Grundfos Holding A/S, 8850 Bjerringbro (DK)
(72) Erfinder: Møller Torben,, 8600 Silkeborg (DK); Hellegaard, Kjeld, 8850 Bjerrinbro (DK)
(74) Vertreter: Patentanwälte Vollmann Hemmer Lindfeld Partnerschaft mbB

(56) Entgegenhaltungen:
- EP-A2- 2 469 687
- GB-A- 2 172 444
- JP-A- 60 141 137
- JP-U- 62 074 477
- US-A- 5 979 087

## Beschreibung

Die Erfindung betrifft einen elektrischen Motor, insbesondere einen Stator eines solchen Motors, gemäß den im Oberbegriff des Anspruchs 1 angegebenen Merkmalen sowie ein Verfahren zur Herstellung eines solchen Stators.

Bei elektrischen Motoren, insbesondere bei frequenzumrichtergesteuerten Motoren, welche mit höheren Frequenzen, als der Netzfrequenz angesteuert werden, ist ein bekanntes Problem, dass insbesondere von den Wicklungsköpfen des Stators Spannungen im Rotor induziert werden, die Ströme erzeugen, die über die Motorwelle, die damit verbundenen Lager zum Motorgehäuse durch Kurzschluss abgebaut werden. Dieser Stromdurchfluss im Lagerbereich führt zu Verschleiß und kann zu vorzeitigem Versagen der Lager führen. Um dies zu vermeiden, zählt es zum Stand der Technik, die Statorwicklung vollständig gegenüber dem Rotor abzuschirmen.

So ist aus es US 5,979,087 bekannt, die Statornuten mit einer elektrisch leitenden Abschirmung zu versehen, sowie im Bereich der Statorköpfe eine elektrisch leitende Abschirmung vorzusehen, welche dafür sorgen, dass eine solche ungewünschte Induktion vom Stator in die Rotorwelle verhindert wird. Die dort im Bereich der Wicklungsköpfe vorgesehen Abschirmung besteht aus einer Vielzahl von mit nur einem Ring verbundenen Blechabschnitten jeweils für die Wicklungsköpfe zu jeder Seite sowie aus Blechabschnitten, welche die Statornut zum Rotor hin abschirmen. Die dort beschriebene Abschirmung ist zum einen fertigungstechnisch sehr aufwändig und hat zum anderen den Nachteil, dass die elektrische Verbindung zum Stator, der wiederum mit dem Motorgehäuse, welches die Lager aufnimmt, verbunden ist, häufig gestört und damit unwirksam ist. Wirksam ist eine solche Abschirmung jedoch nur dann, wenn die elektrische Verbindung zum geerdeten Stator zuverlässig und langzeitstabil sichergestellt ist.

Insoweit günstiger sind die aus US 5,821,649 bekannten Abschirmringe, welche über metallene Klips mechanisch und elektrisch mit dem Statorblechpaket verbunden sind. Diese Klips greifen in Nuten des Stators ein, in den sie eingepresst sind, sodass sich eine gewisse Klemmwirkung einstellt. Auch hierbei kann es zu Kontaktproblemen kommen, auch ist das dort beschriebene Abschirmungskonzept montagetechnisch sehr aufwändig, da zunächst Abschirmbleche für die Nuten selbst eingebracht werden müssen und dann die Klips an dem abschirmenden Ring angebracht und ihrerseits in den Nuten verankert werden müssen. Darüber hinaus erzwingt die Konstruktion, dass die Abschirmung nach dem Anbringen der Statorwicklungen ausgebildet wird. Hierbei kann es leicht zu Beschädigungen der Wicklungen durch scharfkantige Blechteile oder Klips kommen.

JP 60 141 137 offenbart einen Stator eines Elektromotors gemäß dem Oberbegriff des Anspruchs 1; EP 2 469 687 (nachveröffentlicht) offenbart ein Verfahren zur Herstellung eines Stators eines Elektromotors gemäß dem Oberbegriff des Anspruchs 9.

Vor diesem Hintergrund liegt der Erfindung die Aufgabe zugrunde, einen gattungsgemäßen Stator, wie er aus US 5,979,087 bekannt ist, hinsichtlich der Abschirmung zu verbessern. Dabei sollen insbesondere fertigungs- und montagetechnische Aspekte mit berücksichtigt werden. Darüber hinaus soll ein kostengünstiges Verfahren zur Herstellung eines solchen Stators geschaffen werden.

Der vorrichtungsmäßige Teil dieser Aufgabe wird durch die in Anspruch 1 angegebenen Merkmale gelöst. Ein Verfahren zur Herstellung eines solchen Stators ist durch Anspruch 9 definiert. Vorteilhafte Ausgestaltungen des Stators bzw. des Verfahrens ergeben sich aus den Unteransprüchen sowie der nachfolgenden Beschreibung und der Zeichnung.

Der erfindungsgemäße Stator weist einen Statorkern auf, welcher mit diesen durchsetzenden Wicklungen versehen ist, die in den den Statorkern überragenden Bereichen Wicklungsköpfe bilden, wobei im Bereich dieser Wicklungsköpfe mindestens eine mit dem Statorkern verbundene und elektrisch leitenden Wicklungskopfabschirmung vorgesehen ist, weiche gemäß der Erfindung durch segmentierte und beabstandete Abschirmungsabschnitte gebildet ist, welche jeweils mindestens einen Wicklungskopf ganz oder teilweise abschirmen.

Der Statorkern ist typischerweise aus Statorblechpaketabschnitten ausgebildet, kann jedoch auch anderweitig gebildet sein, beispielsweise aus quasi homogenen, pulvermetallurgisch hergestellten Bauteilen. Es versteht sich, dass, wenn im Folgenden von Statorblechpaket oder Statorblechpaketabschnitt die Rede ist, auch ein anderweitig aufgebauter Statorkern oder Statorkernabschnitt Verwendung finden kann.

Grundgedanke der erfindungsgemäßen Lösung ist es somit, auf einen geschlossenen Ring im Bereich der Wicklungsköpfe zu verzichten und stattdessen Abschirmungsabschnitte vorzusehen, welche segmentiert und voneinander beabstandet sind und jeweils nur einen Wicklungskopf ganz oder teilweise abschirmen. Gemäß der Erfindung ist vorgesehen, dass die Abschirmungsabschnitte als Blechabschnitte ausgebildet sind und jedem Blechabschnitt nur ein Wicklungskopf zugeordnet ist, den dieser abschirmt. Dabei genügt es in der Regel, wenn der Blechabschnitt, der den jeweiligen Wicklungskopf abschirmt, den zum Rotor gerichteten Bereich des Wicklungskopfes abdeckt, das heißt, dass der Blechabschnitt geringfügig größer als die Außenkontur des Wicklungskopfes ist. Dadurch, dass die Abschirmungsabschnitte segmentiert und voneinander beabstandet sind, ergeben sich fertigungstechnisch und montagetechnisch wesentliche Vorteile, insbesondere ist es mit dieser Konstruktion möglich, die Abschirmung vor dem Aufbringen der Wicklung zu montieren. Auch ist es möglich, eine solche Abschirmung bei segmentiertem Stator anzubringen, und zwar ebenfalls vor dem Anbringen der Wicklung. Derartige segmentierte Statoren sind beispielsweise aus EP 1 598 918 A1 bekannt, auf die insoweit verwiesen wird.

Die Abschirmungsabschnitte sind als Blechabschnitte ausgebildet sind, weil derartige Blechabschnitte kostengünstig in der Großserienfertigung herstell- und montierbar sind. Dabei ist gemäß der Erfindung vorgesehen, dass jeder Blechabschnitt nur einen Wicklungskopf abschirmt. Dies hat den Vorteil, dass eine Abschirmung im Bereich der Wicklungsköpfe nur dort vorgesehen ist, wo sie auch tatsächlich erforderlich ist und Freiräume daneben verbleiben, welche die Fertigung vereinfachen.

Wenn es sich um einen genuteten Stator handelt, ist es gemäß einer Weiterbildung der Erfindung von Vorteil, wenn ein Abschirmungsabschnitt nicht nur einen Wicklungskopf, sondern auch zumindest einen Teil einer Statornut mit abschirmt. Ein solcher Abschirmungsabschnitt kann in einfacher Weise als einteiliger Blechabschnitt ausgebildet sein, der entsprechend konturiert und gebogen ausgebildet ist, wie dies im Einzelnen weiter unten noch beschrieben ist.

Dabei können gemäß einer Weiterbildung der Erfindung zu beiden Seiten des Statorkerns Abschirmungsabschnitte vorgesehen sein, um beispielsweise die Wicklungsköpfe zu beiden Seiten des Statorblechpakets mit einer Abschirmung zu versehen. Zweckmäßigerweise erfolgt die Nutabschirmung dann auch von beiden Seiten ausgehend jeweils hälftig, wobei die Teilung wahlweise längs oder quer erfolgen kann.

Wenn der Statorkern, also beispielsweise das Statorblechpaket, wie es gemäß der Erfindung vorgesehen ist, aus Kernabschnitten, d. h. dann Blechpaketabschnitten aufgebaut ist, wie es beispielsweise in EP 1 598 918 A1 beschrieben ist, die jeweils mit einer Wicklung versehen sind, dann ist gemäß der Erfindung vorteilhaft, jedem Blechpaketabschnitt mindestens ein Abschirmblechabschnitt zugeordnet, der mit dem Blechpaketabschnitt verbunden ist. Eine solche Anordnung hat den Vorteil, dass die Abschirmblechabschnitte vorteilhaft an den beiden Endseiten des Blechpaketabschnittes befestigt werden können, bevor der Blechpaketabschnitt mit einer Wicklung versehen wird. Alternativ kann die Montage auch nach Zusammenfügen der Blechpaketabschnitte erfolgen.

Erfindungsgemäß ist jeder Abschirmblechabschnitt so ausgebildet und angeordnet, dass er einen in oder auf dem jeweiligen Kernabschnitt - vorzugsweise Blechpaketabschnitt - liegenden Teil aufweist, der parallel zu dem Kernabschnitt - vorzugsweise zu den Blechen des Blechpaketabschnitts - angeordnet ist und mindestens einen, von dem liegenden Abschnitt abgebogenen und eine Abschirmung bildende Schenkel aufweist. Ein solcher abgebogener Schenkel bildet typischerweise eine Abschirmung für einen Wicklungskopf.

Erfindungsgemäß weist der Abschirmblechabschnitt mindestens einen von dem liegenden Teil abgebogenen (weiteren) Schenkel auf, der entgegen der Richtung des die Wicklungskopfabschirmung bildenden (ersten) Schenkels abgebogen ist. Ein solcher zweiter Schenkel, der zum Statorkern, also parallel zur Motorachse gerichtet ist, und vorteilhaft in Einbaulage radial von dem die Kopfabschirmung bildenden ersten Schenkel beabstandet ist, kann vorteilhaft zur Befestigung sowie zur leitenden Verbindung mit dem Statorkern, insbesondere dem Statorblechpaketabschnitt genutzt werden, wenn er dort in einer entsprechend ausgebildeten und dafür vorgesehen Nut befestigt ist.

Gemäß einer weiteren vorteilhaften Ausgestaltung der Erfindung weist der Abschirmblechabschnitt mindestens einen, vorzugsweise zwei von dem liegenden Teil abgebogenen (dritte und vierte) Schenkel auf, die entgegen der Richtung des die Wicklungskopfabschirmung bildenden Schenkels abgebogen und von dem anderen (zweiten) Schenkel und gegebenenfalls voneinander beabstandet sind. Diese (dritten und vierten) Schenkel liegen vorteilhaft in derselben Ebene, wie der die Kopfabschirmung bildende (erste) Schenkel. Sie dienen der Abschirmung von Statornuten, bzw. bei einem segmentierten Stator von zwischen den Segmenten gebildeten Zwischenräumen im Statorkern.

Die obigen Schenkelbezeichnungen (erster, zweiter, dritter, vierter) dienen ausschließlich zum besseren Verständnis, haben jedoch keinerlei Bedeutung hinsichtlich Funktion oder Rangordnung. So ist eine Ausbildung eines Abschirmblechabschnittes denkbar, die lediglich einen ersten, die Kopfabschirmung bildenden und einen weiteren, zum Beispiel einen dritten Schenkel aufweist.

Zwar ist es insbesondere dann, wenn die Abschirmung über das Statorblechpaket geerdet werden soll, wichtig, eine gut leitende Verbindung zwischen der Abschirmung und dem Blechpaket bzw. dem Blechpaketabschnitt herzustellen, doch ist andererseits der Wicklungsdraht vor den meist scharfkantigen Blechen des Statorblechpakets bzw. der Abschirmung zu schützen. Hierzu ist gemäß einer Weiterbildung der Erfindung mindestens ein isolierendes Formteil vorgesehen, welches vorzugsweise den liegenden Teil eines Abschirmblechabschnittes aufnimmt und den Abschirmblechabschnitt sowie einen Teil des Statorblechpakets oder eines Statorblechpaketabschnittes gegenüber der Wicklung isoliert. Ein solches, typischerweise aus Kunststoff bestehendes Formteil stellt also sowohl einen Isolator, als auch einen mechanischen Schutz der Wicklung vor den Blechen dar.

Eine vorteilhafte Ausgestaltung eines solchen Formteils ist derart, dass es den Abschirmblechabschnitt kappenförmig übergreift, wobei letzterer in das isolierende Formteil eingeschoben ist. Dabei muss der Übergriff nicht vollumfänglich sein, sondern nur in den Bereichen, in denen auch die Wicklung zur Anlage kommt. Wenn der Abschirmblechabschnitt in das isolierende Formteil einschiebbar ist, dann können diese beiden Bauteile kostengünstig hergestellt und erst später gefügt werden, was derzeit kostengünstiger ist, als ein Umspritzen des Abschirmblechabschnittes.

Um eine sichere Befestigung des Abschirmblechabschnittes am Statorblechpaketabschnitt bzw. am Statorblechpaket zu gewährleisten, ist vorteilhaft der in eine Nut eingreifende (dritte) Schenkel des Abschirmblechabschnittes mit dem Statorblechpaketabschnitt verschweißt oder kraftschlüssig in die Nut eingegliedert. Letzteres kann beispielsweise dadurch erfolgen, dass dieser Schenkel gewölbt ausgebildet ist und nach dem Fügen von außen entgegen seiner Wölbung verformt wird.

Der erfindungsgemäße Stator wird typischerweise mit einem darin rotierend gelagerten Rotor betrieben. Die Abschirmung befindet sich zwischen Rotor und Stator. Es versteht sich jedoch, dass die Erfindung nicht hierauf beschränkt ist, der Rotor kann auch den Stator umgehend ausgebildet sein. Dann befindet sich die Abschirmung nicht an der radialen Innenseite des Stators, sondern an dessen radialer Außenseite.

Das erfindungsgemäße Verfahren zum Herstellen eines Stators, bei dem ein oder mehrere eine Abschirmung bildende Blechabschnitte an Kernabschnitten angeordnet werden, sind dadurch gekennzeichnet, dass zunächst die Blechabschnitte an Kernabschnitten angebracht werden und erst danach die Wicklung angebracht wird. Dies hat den Vorteil, dass die Wicklung durch die Montage der Abschirmung nicht beschädigt wird. Im Übrigen kann der Abschirmblechabschnitt in analoger Weise wie die übrigen Bleche des Statorblechpaketabschnitts mit diesem verbunden werden..

Die elektrisch leitende Verbindung zum Statorkern, insbesondere zum Statorblechpaket ist nur dann herzustellen, wenn über das Statorblechpaket die Erdung erfolgt. Wenn die Erdung zum Beispiel über das Motorgehäuse direkt erfolgt, kann die Abschirmung auch direkt leitend mit dem Motorgehäuse verbunden sein, beispielsweise durch entsprechende Schenkel, die beim Aufsetzen des Motorgehäuses dieses kontaktieren.

Gemäß der Erfindung werden die Abschirmblechabschnitte in isolierende Formteile eingeschoben, die dann vor dem Anbringen der Wicklungen an den Statorkernabschnitten angeordnet werden. Diese Formteile können dabei nicht nur zur Isolierung sondern auch zur Fixierung der Bauteile dienen, sie schützen zudem die Wicklung vor scharfen Kanten, insbesondere Blechkanten.

Um eine gute elektrisch leitende Verbindung zwischen dem Abschirmblechabschnitt und dem zugehörigen Statorblechpaketabschnitt zu gewährleisten, ist es zweckmäßig, den in der Nut im Statorblechpaketabschnitt liegenden Schenkel des Abschirmblechabschnittes durch Schweißen oder durch Verformen mit dem Statorblechpaket zu verbinden. Auf diese Weise wird nicht nur ein fester Verbund, sondern auch eine elektrische Verbindung mit mehreren Blechen gebildet.

Die Erfindung ist nachfolgend anhand von in der Zeichnung dargestellten Ausführungsbeispielen näher erläutert, Es zeigen:
- Fig. 1a: ein Statorblechpaket mit an den Endseiten angeordneten Blechen zur Bildung der Abschirmung in perspektivischer Darstellung und in
- Fig. 1b: hälftig geschnitten in perspektivischer Darstellung,
- Fig. 2: das Statorblechpaket gemäß Fig. 1 mit gebogenen Abschirmungsabschnitten, in den Darstellungen entsprechend Fig. 1a bzw. Fig. 1b
- Fig. 3: eine erste Ausführung eines Abschirmblechabschnittes in perspektivischer Darstellung,
- Fig. 4: eine zweite Ausführung eines Abschirmblechabschnittes in perspektivischer Darstellung,
- Fig. 5: eine dritte Ausführung eines Abschirmblechabschnittes in perspektivischer Darstellung,
- Fig. 6: den anhand von Fig. 3 dargestellten Abschirmblechabschnitt in einem Kunststoffformteil jeweils für die Ober- und die Unterseite eines Statorblechpaketabschnitts,
- Fig. 7 und Fig. 8: in perspektivischer Darstellung die Statorblechpaketabschnitte mit Abschirmblechabschnitten mit den in Fig. 6 dargestellten Formteilen,
- Fig. 9: den Statorblechpaketabschnitt gemäß Fig. 8 mit einseitig aufgesetztem Formteil,
- Fig. 10: einen mit Abschirmung versehenen Statorblechpaketabschnitt mit Schirmblechabschnitten, wie sie in Fig. 5 dargestellt sind,
- Fig. 11: Verfahrensschritte zur Herstellung der anhand der Fig. 7 und 8 dargestellten, mit Abschirmung versehenen Statorblechpaketabschnitte, und
- Fig. 12: die Eingliederung des Stators in einen Motor im Längsschnitt.

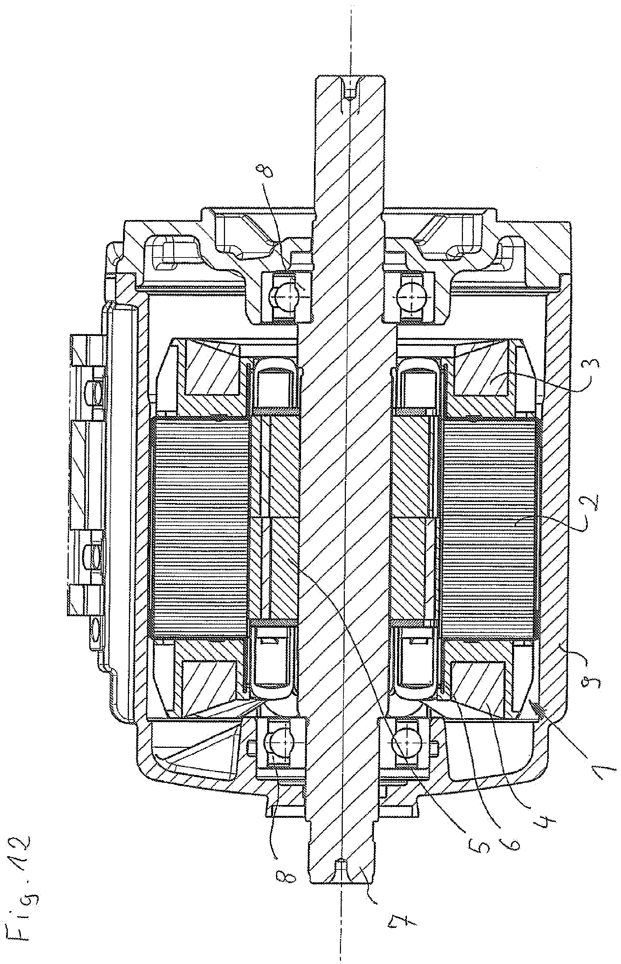

Der grundsätzliche Aufbau eines Motors ist anhand von Fig. 12 dargestellt. Ein Stator 1, welcher den feststehenden Teil des Motors bildet, besteht aus einem Statorblechpaket 2, auf dem Wicklungen 3 des Motors angeordnet sind. In den über das Statorblechpaket 2 hinausragenden Bereichen bilden die Motorwicklungen 3 Wicklungsköpfe 4, die gegenüber dem innerhalb des Stators 1 drehbar gelagerten Rotor 5 mittels ... Abschirmblechabschnitten 6 abgeschirmt sind und damit verhindern, dass über die Statorwicklungen 3 in die Welle 7 des Rotors 5 Ströme induziert werden, welche über Lager 8, in denen die Welle 7 gelagert ist, geführt würden. Die Abschirmblechabschnitte 6 sind leitend mit dem Statorblechpaket 2 verbunden, das wiederum leitend mit dem Motorgehäuse 9 verbunden ist, welches geerdet ist.

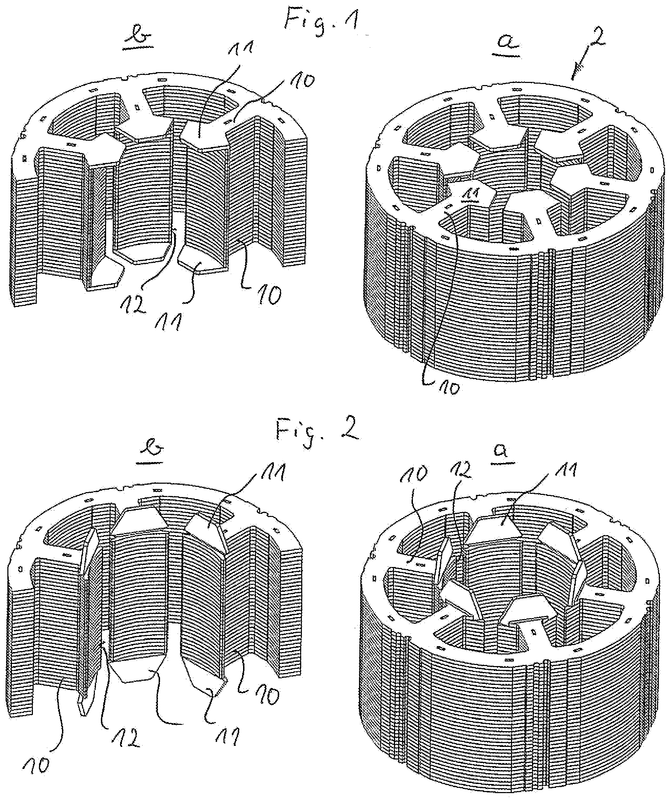

Anhand der Fig. 1 und 2 ist dargestellt, wie derartige Abschirmungsabschnitte 6, welche die Wicklungsköpfe 4 gegenüber dem Rotor 5 elektromagnetisch abschirmen sollen, bei einem aus ringförmigen Statorblechen aufgebautem Statorblechpaket 2 angeordnet werden können. Es handelt sich bei dem dargestellten Statorblechpaket 2 um ein ringförmiges Bauteil, welches aus einer Vielzahl aneinander liegender Bleche gebildet ist, wie dies bei Statorblechpaketen hinlänglich bekannt ist. Das Statorblechpaket 2 weist außen eine geschlossene, im Wesentlichen zylindrische Form auf, in Draufsicht radial nach innen gerichtete Zähne 10, um welche die in den Fig. 1 und 2 nicht dargestellten Motorwicklungen gewickelt werden. Das oberste und das unterste Blech des Statorblechpaketes 2 weisen in Fig. 1 radial nach innen gerichtete Blechabschnitte 11 auf, die Abschirmungsabschnitte sind und jeweils für einen Wicklungskopf 4 eine spätere Abschirmung bilden. Hierzu sind die Blechabschnitte 11, wie in Fig. 2 ersichtlich ist, um 90° nach oben bzw. nach unten abgebogen, sodass sie die Wicklungsköpfe 4 gegenüber dem Rotor 5 elektromagnetisch abschirmen. Die Blechabschnitte 11 sind segmentiert und voneinander beabstandet, das heißt jedem Wicklungskopf ist ein gesonderter Blechabschnitt 11 zugeordnet, zwischen benachbarten Blechabschnitten 11 ist ein Freiraum gebildet, der sich in einer Nut 12 des Statorblechpakets 2 fortsetzt, welche erforderlich ist, um die Wicklung anbringen zu können.

Wenn das Statorblechpaket 2 nicht, wie anhand der Fig. 1 und 2 dargestellt, als geschlossenes ringförmiges Blechpaket ausgebildet, sondern gemäß der Erfindung segmentiert ausgebildet werden soll, was hinsichtlich des Anbringens der Wicklung fertigungstechnisch deutlich günstiger ist, besteht auch das Statorblechpaket aus einzelnen Segmenten, so genannten Statorblechpaketabschnitten 13, die mit Abschirmblechabschnitten versehen, dann mit einer Wicklung versehen und erst danach zu einem geschlossenen Ring, also dem eigentlichen Stator gefügt werden, wie dies in EP 1 598 918 A1 beispielhaft beschrieben ist, auf die insoweit verwiesen wird.

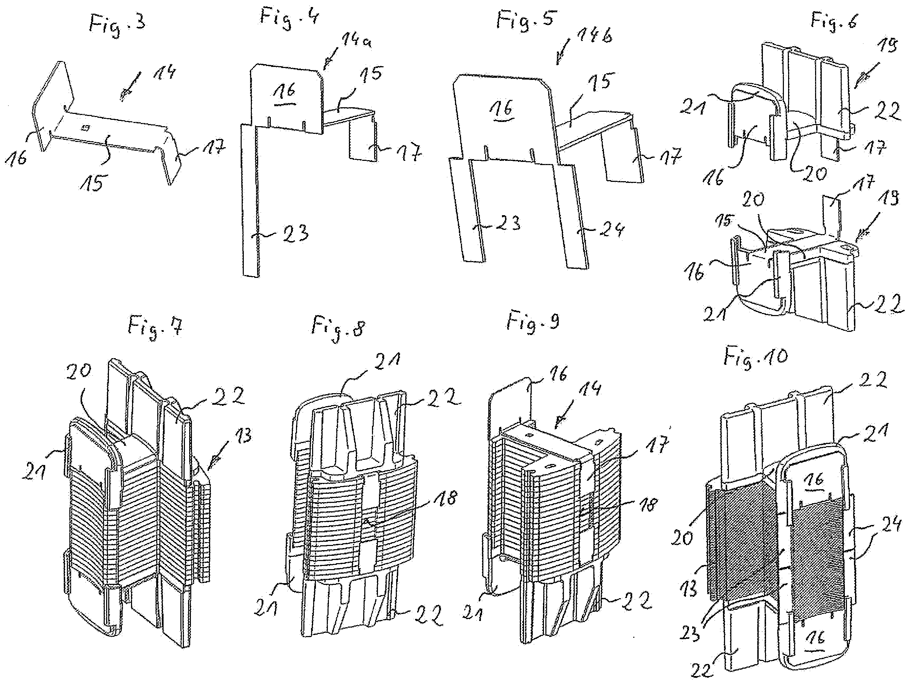

Die Statorblechpaketabschnitte 13 bestehen ebenfalls aus einer Vielzahl von Statorblechabschnitten, die übereinander liegend miteinander verbunden sind. Die obersten und untersten Bleche des Statorblechpaketabschnitts 13 sind als Abschirmblechabschnitte ausgebildet, die in einfachster Form eine Ausgestaltung haben, wie sie anhand von Fig. 3 dargestellt ist. Der dort dargestellte Abschirmblechabschnitt 14 weist einen liegenden Teil 15 auf, der mit dem Statorblechpaketabschnitt 13 quasi als oberstes bzw. unterster Blechabschnitt verbunden ist und der an seiner in Einbaulage radialen Innenseite einen ersten Schenkel 16 aufweist, der von dem liegenden Teil 15, bezogen auf den Statorblechpaketabschnitt 13 um 90°, das heißt in den Zeichnungen nach oben bzw. nach unten abgebogen ausgebildet ist. Dieser erste Schenkel 16 bildet im montierten Zustand einen Abschirmabschnitt, welcher einen Teil der Abschirmung zwischen den Wicklungsköpfen 4 und dem Rotor 5 bildet.

Weiterhin weist der Abschirmblechabschnitt 14 an einem anderen Ende, also in Einbaulage am radial außen liegenden Ende, einen zweiten Schenkel 17 auf, der in Richtung zum Statorblechpaketabschnitt 13 abgebogen ist, also in Gegenrichtung vom ersten Schenkel 16, und der darüber hinaus radial beabstandet vom ersten Schenkel 16 angeordnet ist. Dieser zweite Schenkel 17 greift in eine Nut 18 an der Außenseite des Statorblechpaketabschnitts 13 ein, welche einen Teil des späteren radialen Außenumfangs des Statorblechpakets bildet. Dieser zweite Schenkel 17 dient insbesondere zur elektrisch leitenden Verbindung des Abschirmblechabschnitts 14 mit dem Statorblechpaketabschnitt 13, welches seinerseits in Einbaulage mit dem metallischen Motorgehäuse verbunden ist, welches geerdet ist. In der dargestellten Ausführung ist der zweite Schenkel 17 innerhalb der Nut 18 verschweißt, um eine innige Verbindung mit mehreren Blechabschnitten des Statorblechpaketabschnitts 13 zu bilden. Alternativ kann der zweite Schenkel 17 auch in der Nut 18 verpresst sein, hierzu weist er eine der Krümmung des Statorblechpaketabschnitts 13 in diesem Bereich folgende aber erhöhte Krümmung auf, die mittels eines außen radial nach innen drückenden Werkzeugs nach innen verformt wird, wodurch sich der zweite Schenkel 17 innig in den Seiten der Nut 18 verklemmt und somit eine auch elektrisch gut leitende Verbindung herstellt.

Um zu verhindern, dass der Abschirmblechabschnitt 14 in Kontakt mit der späteren Wicklung kommt, ist ein isolierendes und aus Kunststoff bestehendes Formteil 19 vorgesehen, welches über das Abschirmblechteil 14 geschoben ist bzw. in das das Abschirmblechbauteil eingegliedert ist. Dieses Formteil 19 weist eine im Wesentlichen U-förmige Form auf und einen Steg 20, welcher den Statorblechpaketabschnitt in den Figuren nach oben bzw. nach unten gegenüber der Wicklung isoliert. An diesem Steg 20 schließt sich ein um 90° bezogen auf den Statorblechpaketabschnitt 13 nach außen abgebogener Schenkel 21 an, welcher den ersten Schenkel 16 des Abschirmblechabschnitts 14 an den Seiten sowie der zur Wicklung gerichteten Flachseite übergreift. An der anderen Seite des Stegs 20 schließt ein Schenkel 22 an, welcher den Wicklungskopf radial nach außen übergreift und auf dem Statorblechpaketabschnitt 13 hält. In Fig. 9 ist das obere Formteil 19 abgenommen dargestellt, um zu verdeutlichen, wie dem Abschirmblechabschnitt 14 in das Formteil 19 eingegliedert ist. Das Formteil 19 übergreift den Abschirmblechabschnitt 14 kappenförmig und bildet somit eine elektrische Isolierung gegenüber der Wicklung.

Anhand von Fig. 4 ist eine zweite Ausführung eines Abschirmblechabschnitts 14a dargestellt, der einen weiteren, einen dritten Schenkel 23 aufweist, der den ersten Schenkel 16 über den liegenden Teil 15 in die andere, also zum Statorblechpaketabschnitt 13 weisende Richtung fortsetzt. Dieser Schenkel 23 bildet eine Abschirmung im Bereich einer Statornut, wie sie beim geschlossenen Statorblechpaket 2 anhand der Fig. 1 und 2 dargestellt ist bzw. des Abstands zwischen benachbarten Statorblechpaketabschnitten. Der Schenkel 23 ist also mit radialem Abstand zum Schenkel 17 und parallel dazu angeordnet.

Bei dem Abschirmblechabschnitt 14b, der in Fig. 5 dargestellt ist, ist ein weiterer Schenkel 24, ein vierter Schenkel vorgesehen, der vom dritten Schenkel 23 beabstandet ist, jedoch in derselben radialen Ebene liegt und in einer Ebene mit dem dritten Schenkel 23 sowie dem ersten Schenkel 16. Auch bei dieser Ausführungsform bilden die dritten und vierten Schenkel 23 und 24 Nutabschirmungen, wie dies insbesondere in Fig. 10 sichtbar ist, die einen Statorblechpaketabschnitt 13 mit zwei Abschirmblechabschnitten 14b und überdeckenden Formteilen 19 zeigt. Wie dort deutlich erkennbar ist, bilden die Schenkel 23 und 24 eines Abschirmblechabschnittes 14b jeweils über die Höhe des Statorblechpaketabschnitts 14b zur Hälfte eine Nutabschirmung. An die Schenkel 23 und 24 schließen sich in Einbaulage die Schenkel 23 und 24 des benachbarten Statorblechpaketabschnitts 13 an. Da bei dieser Ausführungsform die Wicklung vor dem Zusammenfügen der Statorblechpaketabschnitte zu einem Stator erfolgt, können die Schenkel 23 und 24 so ausgebildet sein, dass sie jeweils paarweise die dahinterliegende Nut vollständig überdecken.

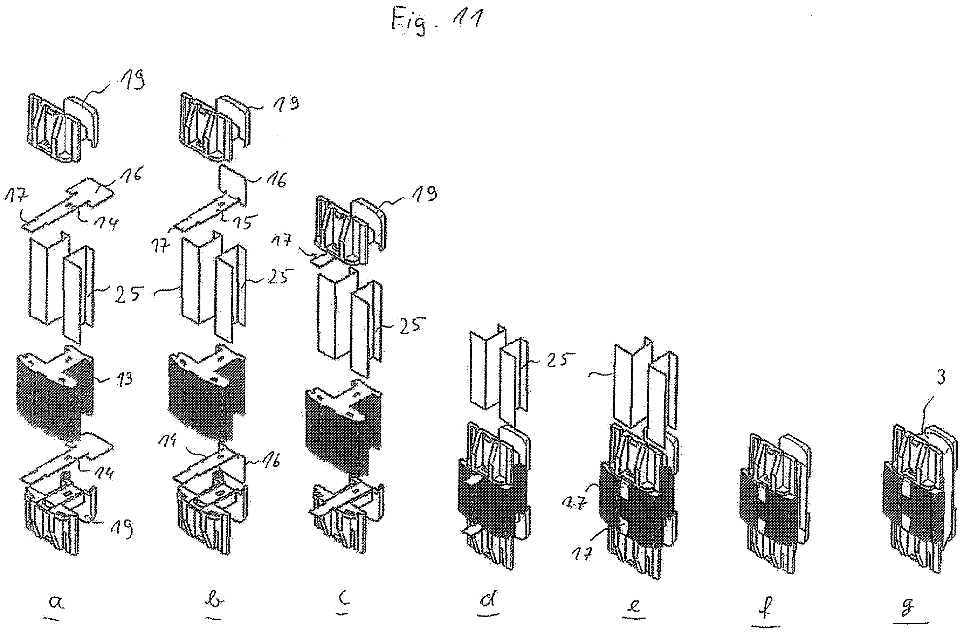

Wie ein solches Statorsegment zur Verwendung der vorbeschriebenen Bauteile hergestellt werden kann, ist anhand von Fig. 11 beispielhaft verdeutlicht.

Fig. 11a zeigt zunächst die verwendeten Bauteile in Explosionsdarstellung. Es handelt sich um einen Statorblechpaketabschnitt 13, zwei in der Ober- bzw. Unterseite des Statorblechpaketabschnitts 13 anzubringende, in Fig. 11a noch unverformte Abschirmblechabschnitte 14, die diese aufnehmenden Formteile 19 sowie im Querschnitt U-förmige Formteile 25, welche die Wicklung innerhalb des Statorblechpaketabschnitts 13 gegenüber diesem isolieren sollen. Aus den noch flachen Abschirmbfechabschnitten 14 wird gemäß Fig. 11b der erste, den späteren Abschirmungsabschnitt bildende Schenkel 16 um 90° gegenüber dem liegenden Teil 15 abgebogen. Sodann erfolgt das Eingliedern der einseitig abgebogenen Abschirmblechabschnitte 14 mit den ersten Schenkeln 16 in das jeweilige Formteil 19 (Fig. 11c). Diese Formteile 19 werden dann zusammen mit dem darin eingegliederten Abschirmblechabschnitt 14 mit dem Statorblechpaketabschnitt 13 verbunden (Fig. 11d), wonach die zweiten Schenkel 17 abgebogen und in der Nut 18 des Statorblechpaketabschnitts 13 eingegliedert und befestigt werden, entweder durch Einpressen oder durch verschweißen (Fig. 1e). Schließlich werden die Formteile 25 in den Statorblechpaketabschnitt 13 eingegliedert (Fig. 11f), wonach die Wicklung angebracht wird (Fig. 11g) und erst danach werden die Statorsegmente zum Stator verbunden.

### Bezugszeichenliste

- 1 -: Stator
- 2 -: Statorblechpaket
- 3 -: Motorwicklung
- 4 -: Wicklungsköpfe
- 5 -: Rotor
- 6 -: Abschirmungsabschnitte
- 7 -: Welle
- 8 -: Lager
- 9 -: Motorgehäuse
- 10 -: Zähne
- 11 -: Blechabschnitte
- 12 -: Nut
- 13 -: Statorblechpaketabschnitt
- 14 -: Abschirmblechabschnitt
- 14a -: Abschirmblechabschnitt der Fig. 4
- 14b -: Abschirmblechabschnitt der Fig. 5
- 15 -: liegender Teil von 14
- 16 -: erste Schenkel von 14
- 17 -: zweiter Schenkel von 14
- 18 -: Nut
- 19 -: Formteil
- 20 -: Steg von 19
- 21 -: Schenkel von 19
- 22 -: Schenkel von 19
- 23 -: dritter Schenkel von 14a in Fig. 4
- 24 -: vierter Schenkel von 14b in Fig. 5
- 25 -: Formteile

## Patentansprüche

1. Stator eines Elektromotors, wobei der Elektromotor einen Rotor und den Stator umfasst, wobei der Stator einen Statorkern (2) aufweist, welcher mit diesen durchsetzenden Wicklungen (3) versehen ist, die in den den Statorkern (2) überragenden Bereichen Wicklungsköpfe (4) bilden, mit mindestens einer mit dem Statorkern (2) verbundenen elektrisch leitenden Wicklungskopfabschirmung, die durch segmentierte und zueinander beabstandete Abschirmungsabschnitte (6, 16) gebildet ist, die als Blechabschnitte ausgebildet sind und jeweils nur einen Wicklungskopf (4) zum Rotor hin ganz oder teilweise abschirmen, wobei der Statorkern (2) aus Kernabschnitten (13) aufgebaut ist, die jeweils mit einer Wicklung versehen sind, und dass jeder Kernabschnitt (13) mindestens einen Abschirmblechabschnitt (14) aufweist, der mit dem Kernabschnitt (13) verbunden ist, wobei der Abschirmblechabschnitt (14) einen in oder auf dem Kernabschnitt (13) liegenden Teil (15) und mindestens einen davon abgebogenen und eine Abschirmung bildenden Schenkel (16) aufweist,
**dadurch gekennzeichnet, dass**
der Abschirmblechabschnitt (14) mindestens einen von dem liegenden Teil (15) abgebogenen Schenkel (17) aufweist, der entgegen der Richtung des die Wicklungskopfabschirmung bildenden Schenkels (16) abgebogen ist.

2. Stator nach Anspruch 1, **dadurch gekennzeichnet, dass** ein Abschirmblechabschnitt (14) so ausgebildet ist, dass er auch zumindest einen Teil einer Statornut (12) mit abschirmt.

3. Stator nach einem der vorhergehenden Ansprüche, **dadurch gekennzeichnet, dass** zu beiden Seiten des Statorkerns (2) Abschirmblechabschnitte (14) vorgesehen sind.

4. Stator nach einem der vorhergehenden Ansprüche, **dadurch gekennzeichnet, dass** der Statorkern (2) aus Blechpaketabschnitten (13) aufgebaut ist und der liegende Teil (15) des Abschirmblechabschnitts (14) in oder auf dem Blechpaketabschnitt (13) liegt.

5. Stator nach einem der vorhergehenden Ansprüche, **dadurch gekennzeichnet, dass** der Abschirmblechabschnitt (14) mindestens einen, vorzugsweise zwei von dem liegenden Teil (15) abgebogene Schenkel (23, 24) aufweist, die entgegen der Richtung des die Wicklungskopfabschirmung bildenden Schenkels (16) abgebogen und von dem anderen Schenkel (17) und gegebenenfalls voneinander beabstandet sind.

6. Stator nach einem der vorhergehenden Ansprüche, **dadurch gekennzeichnet, dass** ein zum Statorkern (2) gerichteter Schenkel (17) in einer am Statorkernabschnitt (13) vorgesehenen Nut (18) angeordnet ist und eine elektrisch leitende Verbindung mit dem Statorkernabschnitt (13) gebildet ist.

7. Stator nach einem der vorhergehenden Ansprüche, **dadurch gekennzeichnet, dass** der Statorkernabschnitt (13) mit mindestens einem isolierenden Formteil (19) versehen ist, welches vorzugsweise den liegenden Teil (15) eines Abschirmblechabschnitts (14) aufnimmt und den Abschirmblechabschnitt (14) sowie einen Teil des Statorkernabschnittes (13) gegenüber der Wicklung isoliert.

8. Stator nach Anspruch 7, **dadurch gekennzeichnet, dass** das isolierende Formteil den Abschirmblechabschnitt (14) kappenförmig übergreift und der Abschirmblechabschnitt (14) in das isolierende Formteil (19) eingeschoben ist.

9. Verfahren zum Herstellen eines Stators eines Elektromotors, wobei der Elektromotor einen Rotor und den Stator umfasst, insbesondere eines Stators nach einem der vorhergehenden Ansprüche, wobei in dem Verfahren ein oder mehrere eine Abschirmung des Wicklungskopfes des Stators zum Rotor bildende Blechabschnitte an Kernabschnitten (13) des Stators angeordnet werden und eine oder mehrere Wicklungen angebracht werden, wobei zunächst die Blechabschnitte an den Kernabschnitten (13) angebracht werden und erst danach die Wicklung angebracht wird, **dadurch gekennzeichnet, dass** die Abschirmblechabschnitte (14) in isolierende Formteile (19) eingeschoben werden, die dann vor dem Anbringen der Wicklungen an den Statorkernabschnitten (13) angeordnet werden.

10. Verfahren nach Anspruch 9, **dadurch gekennzeichnet, dass** die Abschirmblechabschnitte (14) mit ihren jeweils in einer Nut (18) am Statorkernabschnitt (13) liegenden Schenkeln (17) durch Schweißen oder durch Verformen leitend mit dem Statorkernabschnitt verbunden werden.

## Claims

1. A stator of an electric motor, wherein the electric motor comprises a rotor and the stator, wherein the stator comprises a stator core (2) which is provided with windings (3) which pass through this and which in the regions which project beyond the stator core (2) form winding heads (4), with at least one winding head shielding which is electrically conductively connected to the stator core (2) and which is formed by segmented shielding sections (6, 16), said sections being distanced to one another, designed as sheet metal sections and completely or partly shielding in each case only one winding head (4) to the rotor, wherein the stator core (2) is constructed from core sections (13) which are each provided with a winding, and that each core section (13) comprises at least one shielding sheet metal section (14) which is connected to the core section (13), wherein the shielding sheet metal section (14) comprises a part (15) which lies in or on the core section (13), and at least one limb (16) which is bent away therefrom and which forms a shielding, **characterised in that** the shielding sheet metal section (14) comprises at least one limb (17) which is bent away from the lying part (15) and which is bent away opposite to the direction of the limb (16) which forms the winding head shielding.

2. A stator according to claim 1, **characterised in that** a shielding sheet metal section (14) is designed such that it also shields at least a part of a stator groove (12).

3. A stator according to one of the preceding claims, **characterised in that** shielding sheet metal sections (14) are provided at both sides of the stator core (2).

4. A stator according to one of the preceding claims, **characterised in that** the stator core (2) is constructed from sheet lamination bundle sections (13) and the lying part (15) of the shielding sheet metal section (14) lies in or on the sheet lamination bundle section (13).

5. A stator according to one of the preceding claims, **characterised in that** the shielding sheet metal section (14) comprises at least one, preferably two limbs (23, 24) which are bent away from the lying part (15), are bent away opposite to the direction of the limb (16) forming the winding head shielding and are distanced from the other limb (17) and possibly from one another.

6. A stator according to one of the preceding claims, **characterised in that** a limb (17) which is directed to the stator core (2) is arranged in a groove (18) which is provided on the stator core section (13) and an electrically conductive connection to the stator core section (13) is formed.

7. A stator according to one of the preceding claims, **characterised in that** the stator core section (13) is provided with at least one insulating shape part (19) which preferably receives the lying part (15) of a shielding sheet metal section (14) and insulates the shielding sheet metal section (14) as well as a part of the stator core section (13) with respect to the winding

8. A stator according to claim 7, **characterised in that** the insulating shape part engages over the shielding sheet metal section (14) in a cap-like manner and the shielding sheet metal section (14) is inserted into the insulating shape part (19).

9. A method for manufacturing a stator of an electric motor, wherein the electric motor comprises a rotor and the stator, in particular a stator according to one of the preceding claims, wherein in the method, one or more sheet metal sections which form a shielding of the winding head of the stator to the rotor are arranged on core sections (13) of the stator and one or more windings are attached, wherein firstly the sheet metal sections are attached to the core sections (13) and only after is the winding attached, **characterised in that** the shielding sheet metal sections (14) are inserted into insulating shape parts (19) which are then arranged on the stator core sections (13) before the attachment of the windings.

10. A method according to claim 9, **characterised in that** the shielding sheet metal sections (14) with their limbs (17) which each lie in a groove (18) on the stator core section (13) are connected to the stator core section in a conductive manner by way of welding or deforming.

## Revendications

1. Stator d'un moteur électrique, dans lequel le moteur électrique comprend un rotor et un stator, le stator comportant un noyau de stator (2) pourvu d'enroulements (3) traversants, qui forment des têtes d'enroulement (4) dans les régions dépassant du noyau de stator (2), comprenant au moins un blindage de tête d'enroulement électriquement conducteur relié au noyau de stator (2), qui est formé de parties de blindage (6, 16) segmentées et à distance les unes des autres qui se présentent sous la forme de segments de tôle et protègent chacune, totalement ou en partie, une seule tête d'enroulement (4) en direction du rotor, où le noyau de stator (2) est constitué de parties de noyau (13), chacune pourvue d'un enroulement, et chaque partie de noyau (13) comportant au moins un segment de tôle de blindage (14) qui est relié à la partie de noyau (13), le segment de tôle de blindage (14) présentant une partie (15) située dans ou sur la partie de noyau (13) et au moins une branche (16) repliée par rapport à celle-ci et formant un blindage, **caractérisé en ce que** le segment de tôle de blindage (14) présente au moins une branche (17), repliée par rapport à la partie horizontale (15), qui est repliée dans la direction opposée à celle de la branche (16) formant le blindage de tête d'enroulement.

2. Stator selon la revendication 1, **caractérisé en ce qu'**un segment de tôle de blindage (14) est configuré de façon à protéger également au moins une partie d'une encoche de stator (12).

3. Stator selon l'une des revendications précédentes, **caractérisé en ce que** des segments de tôle de blindage (14) sont prévus des deux côtés du noyau de stator (2).

4. Stator selon l'une des revendications précédentes, **caractérisé en ce que** le noyau de stator (2) est constitué de segments de paquets de tôles (13) et la partie horizontale (15) du segment de tôle de blindage (14) repose dans ou sur le segment de paquets de tôles (13).

5. Stator selon l'une des revendications précédentes, **caractérisé en ce que** le segment de tôle de blindage (14) comprend au moins une, de préférence deux, branche(s) (23, 24) repliées par rapport à la partie horizontale (15), lesquelles sont repliées dans la direction opposée à celle de la branche (16) formant le blindage de tête d'enroulement et sont espacées de l'autre branche (17) et éventuellement l'une de l'autre.

6. Stator selon l'une des revendications précédentes, **caractérisé en ce qu'**une branche (17) orientée vers le noyau de stator (2) est disposée dans une encoche (18) prévue sur la partie de noyau de stator (13) et **en ce qu'**est formée une liaison électriquement conductrice avec la partie de noyau de stator (13).

7. Stator selon l'une des revendications précédentes, **caractérisé en ce que** la partie de noyau de stator (13) est pourvue d'au moins une pièce moulée isolante (19) qui reçoit de préférence la partie horizontale (15) d'un segment de tôle de blindage (14) et isole le segment de tôle de blindage (14) ainsi qu'une partie de la partie de noyau de stator (13) vis à vis de l'enroulement.

8. Stator selon la revendication 7, **caractérisé en ce que** la pièce moulée isolante coiffe, par sa forme en capuchon, le segment de tôle de blindage (14), et **en ce que** le segment de tôle de blindage (14) est inséré dans la pièce moulée isolante (19).

9. Procédé de fabrication d'un stator d'un moteur électrique, dans lequel le moteur électrique comprend un rotor et un stator, en particulier un stator selon l'une des revendications précédentes, dans lequel, dans le procédé, sont disposés un ou plusieurs segments de tôle formant un blindage de la tête d'enroulement du stator vis à vis du rotor au niveau de parties de noyau (13) du stator et sont appliqués un ou plusieurs enroulements, dans lequel les segments de tôle sont tout d'abord appliqués sur les parties de noyau (13) et l'enroulement est appliqué seulement ensuite, **caractérisé en ce que** les segments de tôle de blindage (14) sont insérés dans des pièces moulées isolantes (19) qui sont ensuite disposées au niveau des parties de noyau de stator avant la mise en place des enroulements.

10. Procédé selon la revendication 9, **caractérisé en ce que** les segments de tôle de blindage (14) avec leurs branches (17) reposant chacune dans une encoche (18) sur la partie de noyau de stator (13) sont reliés de manière conductrice à la partie de noyau de stator par soudage ou par déformation.
